# EUROPEAN PATENT APPLICATION

(11) **EP 3 153 353 A1**
(43) Date of publication of application: **12.04.2017**
(21) Application number: 15803808.3
(22) Date of filing: 04.06.2015
(51) Int. Cl.: B60R 1/00, B60R 1/04, G02B 27/01, G09F 9/00

(54) **ELECTRONIC MIRROR DEVICE**

(30) Priority: 06.06.2014 JP 2014117261
(71) Applicant: Panasonic Intellectual Property Management Co., Ltd., Osaka-shi, Osaka 540-6207 (JP)
(72) Inventor: OISHI, Toshiharu, Osaka, Osaka-shi 540-6207 (JP)
(74) Representative: Schwabe - Sandmair - Marx
(86) International application number: PCT/JP2015/002828
(87) International publication number: WO 2015/186362

(57) **Abstract**

An electronic mirror device has a display device that is mounted on a mounting position of a rear view mirror in an interior of a vehicle and displays an image taken by a camera mounted on the vehicle. The display device has a body case having an opening, and a display unit that is mounted in the body case. The display unit has a video display unit, and a half mirror. The video display unit has a display surface facing an opening of the body case. The half mirror is disposed closer to the opening of the body case than to the video display unit, and apart from the display surface. A gap between the half mirror and the video display unit is smaller at least at one of both ends of the half mirror in a horizontal direction than at a center of the half mirror.

## Description

### TECHNICAL FIELD

The present invention relates to an electronic mirror device for providing a driver of a vehicle with an image that is taken by a camera mounted to the vehicle.

### BACKGROUND ART

There is known a conventional electronic mirror device having a half mirror disposed in front of a video display unit. In a case where a rear vision is blocked by, for example, a body of a rear seat display device and rear viewing becomes difficult, the driver can see rearward by watching, through the half mirror, a video which is taken by a camera mounted to the vehicle and displayed on the video display unit (see, for example, PTL 1).

The conventional electronic mirror device is provided with a gap which is disposed between the half mirror and the video display unit and serves as a means for protecting the display screen of the video display unit. That is, the half mirror is a single sheet and is held at its periphery to constitute a single elastic member by itself. Therefore, in a case, for example, where the display screen of the video display unit is unintentionally hit by something, the gap between the half mirror and the video display unit allows the half mirror to function as an elastic body, so that the half mirror absorbs a shock on the video display unit.

### Citation List

### Patent Literature

PTL 1: Unexamined Japanese Patent Publication No. H11-291817

### SUMMARY OF THE INVENTION

The present invention provides an electronic mirror device that is capable of protecting a video display unit by a half mirror and preventing occurrence of an image shift, or a double image, which would otherwise be caused by the half mirror.

An electronic mirror device of the present invention has a display device that is mounted on a mounting position of a rear view mirror in an interior of a vehicle and displays an image taken by a camera mounted on the vehicle. This display device has a body case having an opening, and a display unit mounted in the body case. The display unit has a video display unit, and a half mirror. The video display unit has a display surface facing toward the opening of the main body. The half mirror is disposed closer to the opening of the main body than to the video display unit, and is apart from the display surface. A gap between the half mirror and the video display unit is smaller at one end or both ends of the half mirror in a horizontal direction than at a center of the half mirror.

According to the present invention, it is possible to protect the video display unit by the half mirror by providing a gap between the video display unit and the half mirror. In addition, it is possible to prevent occurrence of the image shift, or the double image, by making the gap between the half mirror and the video display unit to be smaller at a portion farther from a driver's seat than at the center of the half mirror.

### BRIEF DESCRIPTION OF DRAWINGS

FIG. 1 is a front view illustrating an interior of an automobile equipped with an electronic mirror device in accordance with an exemplary embodiment of the present invention.
FIG. 2 is a plan view of the automobile shown in FIG. 1.
FIG. 3 is a schematic diagram illustrating an inside of the automobile shown in FIG. 1 viewed from a side of the automobile.
FIG. 4 is a front view of a display device in accordance with the exemplary embodiment of the present invention.
FIG. 5 is a sectional view of the display device shown in Fig. 4.
FIG. 6 is an explanation diagram illustrating an arrangement of a liquid crystal display and a half mirror in accordance with the exemplary embodiment of the present invention.
FIG. 7 is a diagram explaining a relationship between a parallax shift and a displayed image in accordance with the exemplary embodiment of the present invention.
FIG. 8 is a control block diagram of the electronic mirror device in accordance with the exemplary embodiment of the present invention.
FIG. 9A is an explanation diagram illustrating another arrangement of a liquid crystal display and a half mirror in accordance with the exemplary embodiment of the present invention.
FIG. 9B is an explanation diagram illustrating still another arrangement of a liquid crystal display and a half mirror in accordance with the exemplary embodiment of the present invention.
FIG. 9C is an explanation diagram illustrating yet another arrangement of a liquid crystal display and a half mirror in accordance with the exemplary embodiment of the present invention.
FIG. 9D is an explanation diagram illustrating further another arrangement of a liquid crystal display and a half mirror in accordance with the exemplary embodiment of the present invention.
FIG. 10 is a diagram illustrating an image shift in a conventional electronic mirror device.
FIG. 11 is a diagram explaining a parallax shift in an electronic mirror device.

### DESCRIPTION OF EMBODIMENTS

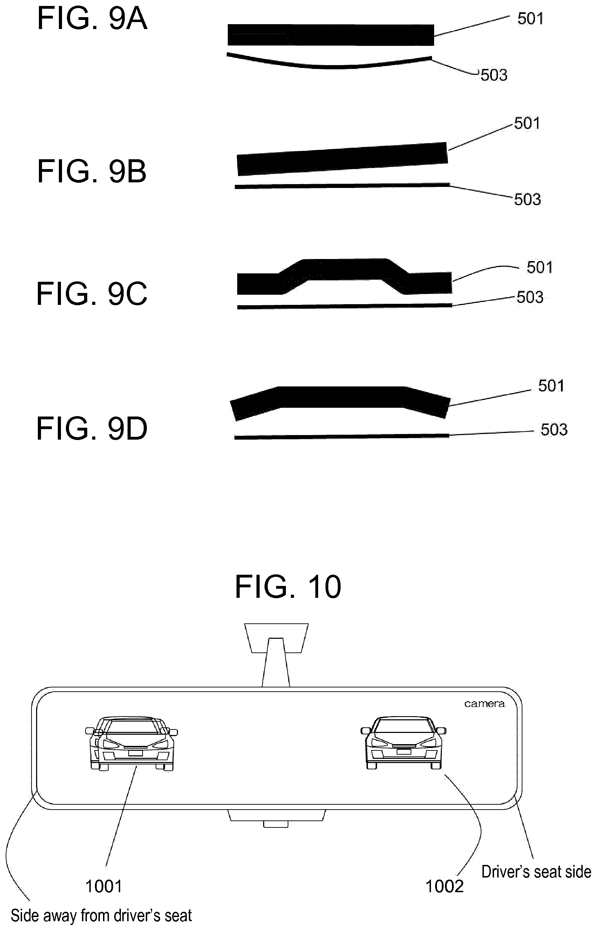

Prior to describing an exemplary embodiment of the present invention, a problem of the conventional electronic mirror device will be briefly described. As described above, the conventional electronic mirror device is provided with a gap between the half mirror and the video display unit. Due to the gap provided between the half mirror and the video display unit in this manner, a video image displayed on the video display unit appears as a reflection image on a surface of the half mirror facing the video display unit. Accordingly, an image shift, or a double image, like image 1001 as shown in FIG. 10 may occur depending on the viewing angle or the position of the video display unit.

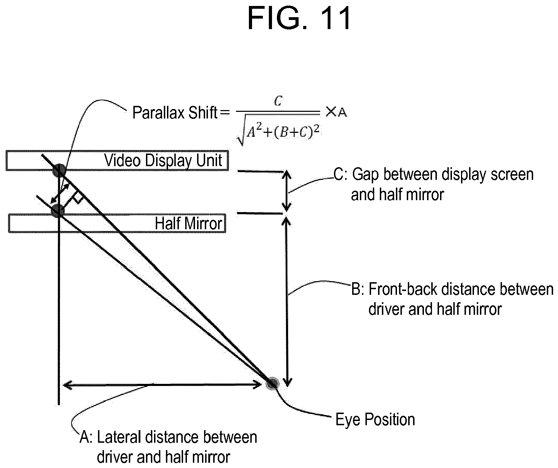

The image shift, or the double image, is caused by the parallax shift as shown in FIG. 11, and increases with the distance from the driver's seat. Referring to FIG. 10, the image shift of image 1001 at the position in the direction away from the driver's seat is larger than the image shift of image 1002 at the position in the direction toward the driver's seat.

The image shift, or double image, reduces the visibility of the electronic mirror device, and might possibly provide an illusion as if a vehicle behind the own vehicle has started a next action.

Meanwhile, there is a tendency that the lateral size of the video display unit of the electronic mirror device is larger, so that the image shift, or double image, also may occur increasingly.

Hereinafter, an example in which an electronic mirror device in accordance with an exemplary embodiment of the present invention is mounted to a vehicle will be described with reference to the accompanying drawings. In this example, the vehicle is an automobile, and the video display unit is a liquid crystal display.

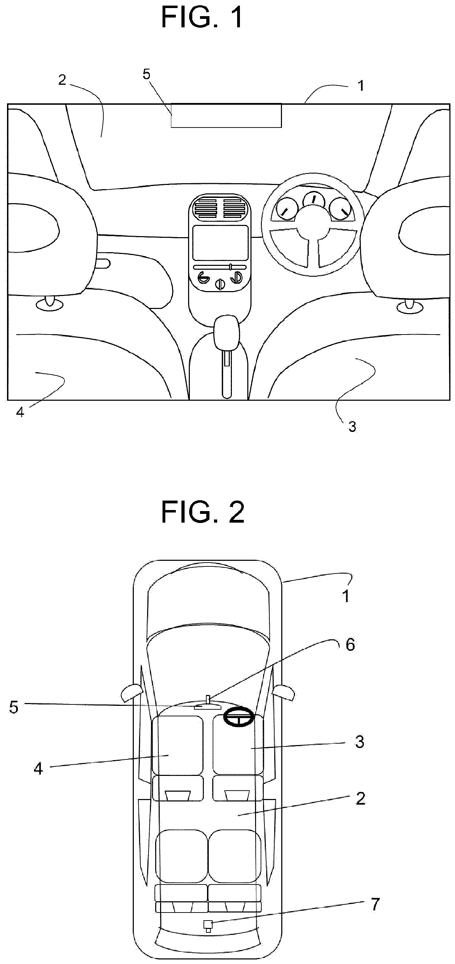

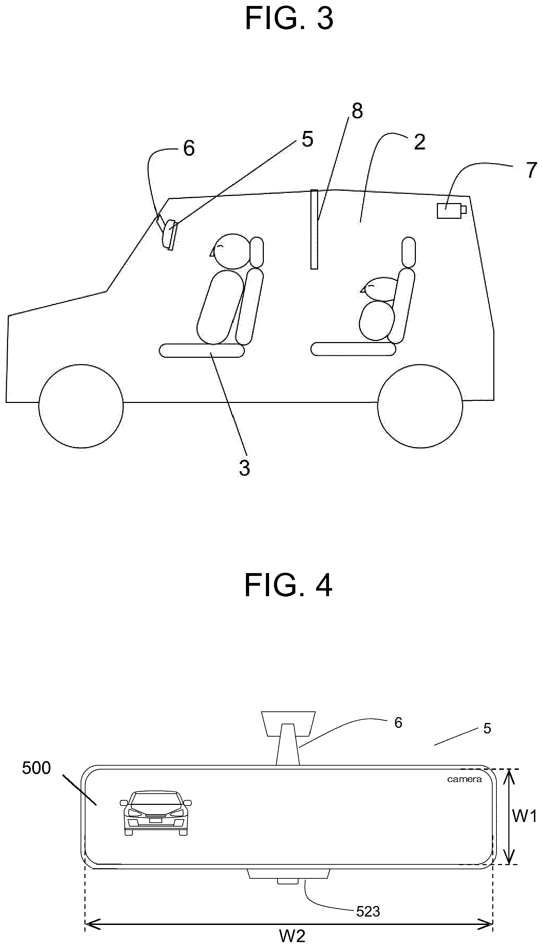

As shown in FIG. 1 to FIG. 3, display device 5 which constitutes an electronic mirror device in accordance with the present exemplary embodiment is mounted, movably to be adjusted with respect to mounting unit 6, on a rear view mirror mounting position in front of the space between driver's seat 3 and front passenger's seat 4 in interior 2 of automobile 1.

Display device 5 is configured such that the content of display on display unit 500 can be switched, by operating operation unit 523, between a video display provided by the liquid crystal display as a video display unit and a display provided by the half mirror as a mirror.

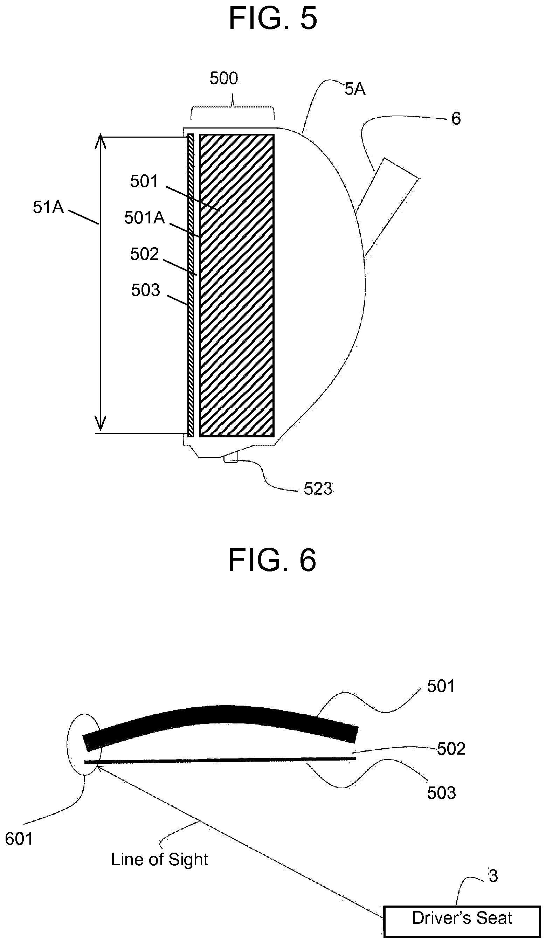

As shown in FIG. 5, display device 5 has body case 5A having opening 51A at a driver's seat side, and display unit 500 mounted in body case 5A. Display unit 500 has liquid crystal display 501 encased in body case 5A so that a liquid crystal display surface is located at the driver's seat side, half mirror 503 disposed on the driver's seat side of liquid crystal display 501 so as to be apart from liquid crystal display 501 with specified gap 502 therebetween, and operation unit 523 used to turn on or off the liquid crystal display.

That is, display device 5 has body case 5A having opening 51A, and display unit 500 mounted in body case 5A. Display unit 500 has a length W1 in a first direction, and length W2 in a second direction. Length W2 is longer than length W1. The second direction is a horizontal direction. Lengths W1 and W2 may be substantially equal to each other. Display unit 500 has liquid crystal display 501, which is a video display unit, and half mirror 503. Liquid crystal display 501 has display surface 501A facing opening 51A of body case 5A. Half mirror 503 is disposed closer to opening 51A than to liquid crystal display 501, and is apart from display surface 501A.

Half mirror 503 is held at its periphery by the opening of body case 5A, so that half mirror 503 functions as a single elastic body by itself.

In a case, for example, where the electronic mirror device is unintentionally hit on the display surface side by something, gap 502 between half mirror 503 and liquid crystal display 501 allows half mirror 503 to function as an elastic body. That is, gap 502 allows half mirror 503 to bend toward liquid crystal display 501 to absorb the shock and push back the thing hitting the display surface side toward the direction opposite to liquid crystal display 501, so that the shock toward liquid crystal display 501 can be absorbed.

According to the present exemplary embodiment, liquid crystal display 501 and half mirror 503 are disposed as shown in FIG. 6. That is, liquid crystal display 501 has a shape that is curved to form a recess such that the gap between liquid crystal display 501 and half mirror 503, which has a flat shape, is smaller at the portion away from the driver's seat than at the center portion. In other words, half mirror 503 has a flat plate shape, and liquid crystal display 501 has a shape that forms a recess facing half mirror 503.

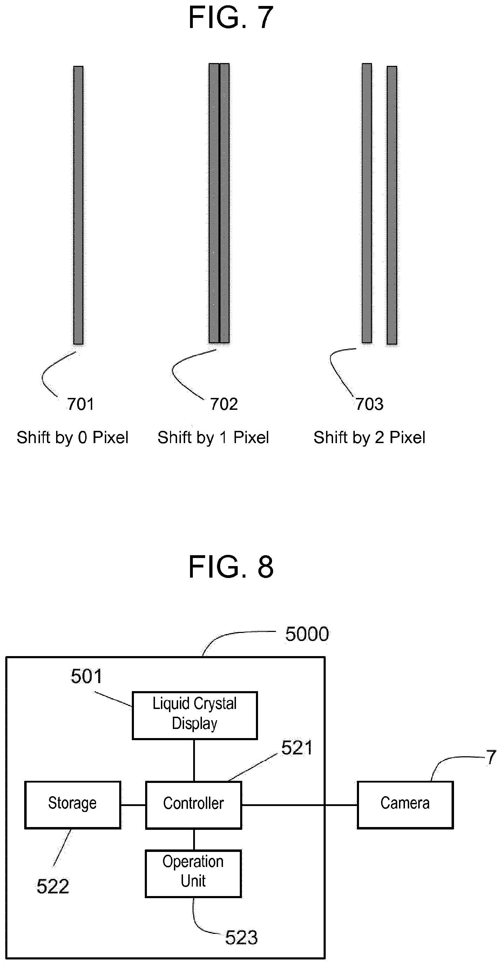

In addition, according to the present exemplary embodiment, the gap between liquid crystal display 501 and half mirror 503 at side 601 away from the driver's seat is made such that an image shift is not caused as illustrated in FIG. 7, or that the parallax between an image displayed on liquid crystal display 501 and an image reflected on half mirror 503 is equal to or smaller than one pixel of liquid crystal display 501.

More specifically, an image displayed on liquid crystal display 501 is reflected by a surface of half mirror 503 facing display surface 501A to produce another image. From the viewpoint at the driver's seat, a parallax shift is caused between these two images. Considering this, the gap between liquid crystal display 501 and half mirror 503 at an end of length W2 of half mirror 503 in the second direction is set such that the parallax shift becomes equal to or smaller than one pixel of liquid crystal display 501.

As shown in FIG. 7, if the parallax is 0 (zero) pixel, no image shift occurs in image 701. If the parallax is equal to or smaller than one pixel, no image shift occurs in image 702, but lines are seen as a thick line. If the parallax is larger than one pixel, an image shift, or a double image, occurs in image 703.

According to the present exemplary embodiment, the gap between liquid crystal display 501 and half mirror 503 is set such that the parallax shift becomes equal to or smaller than one pixel of liquid crystal display 501 at side 601, which is farthest from the driver's seat and at which a maximum parallax is caused.

Referring to FIG. 11, for example, assume that A (a lateral distance between driver's seat 3 and half mirror 503) is 350 mm, B (a distance in the front-back direction between driver's seat 3 and half mirror 503) is 550 mm, and the half mirror is disposed parallel to driver's seat 3. Also assume that the RGB pixel pitch of liquid crystal display 501 is 0.25 mm. In this case, in order to make the parallax shift equal to or smaller than one pixel, or the parallax shift equal to or smaller than 0.25 mm, the gap between liquid crystal display 501 and half mirror 503 may be equal to or smaller than 0.47 mm. This order of the gap is adequately large that can be adjusted by the current manufacturing technologies.

Liquid crystal display 501 displays a rear view from automobile 1 taken by camera 7 mounted to automobile 1. Camera 7 and liquid crystal display 501 are connected to controller 521 as shown in FIG. 8. Controller 521 is connected to storage 522 storing therein operation programs, and operation unit 523 for operating a power switch (not shown) and the like.

In the control block diagram of FIG. 8, liquid crystal display 501, controller 521, storage 522 and operation unit 523 are components of electronic mirror device 5000 in accordance with the present disclosure.

As described hereinabove, electronic mirror device 5000 in accordance with the present embodiment is provided with gap 502 between liquid crystal display 501 and half mirror 503 to make it possible to protect liquid crystal display 501 by half mirror 503. In addition, the gap between liquid crystal display 501 and half mirror 503 at the side away from the driver's seat is set such that the parallax between the image displayed on liquid crystal display 501 and the image reflected on half mirror 503 becomes equal to or smaller than one pixel of liquid crystal display 501. Accordingly, it is possible not only to protect liquid crystal display 501 by half mirror 503, but also to prevent occurrence of an image shift, or a double image, due to half mirror 503.

Although an example of using a liquid crystal display as a video display unit is described, the video display unit may not be limited to the liquid crystal display, but may be any kind of display unit that can display an image taken by the camera, including, for example, an organic electroluminescence display.

The gap between liquid crystal display 501 and half mirror 503 may be appropriately changed to the forms as shown in FIG. 9A to FIG. 9D.

For example, as shown in FIG. 9A, half mirror 503 may be curved to form a protrusion toward the driver's seat so that the gap between half mirror 503 and liquid crystal display 501, which has a planar shape, becomes smaller at the side away from the driver's seat than at the center. That is, display surface 501A of liquid crystal display 501 may be planar, and half mirror 503 may be curved to form a protrusion that protrudes in the direction opposite to display surface 501A.

Alternatively, as shown in FIG. 9B, each of liquid crystal display 501 and half mirror 503 may have a planar shape, and liquid crystal display 501 may be inclined with respect to half mirror 503 so that the gap between liquid crystal display 501 and half mirror 503 is smaller at the side away from the driver's seat than at the side closer to the driver's seat. In an opposite manner, half mirror 503 may be inclined with respect to liquid crystal display 501.

Further alternatively, it would be apparent that the same advantageous effects can be obtained by the configurations as shown in FIG. 9C and FIG. 9D. That is, the gap between half mirror 503 and liquid crystal display 501 may be smaller at one end or both ends of half mirror 503 in the second direction (the horizontal direction) than at the center of half mirror 503. More specifically, in a case of mounting electronic mirror device 5000 in accordance with the present exemplary embodiment in an automobile with a steering wheel on the right side, the gap between half mirror 503 and liquid crystal display 501, which is a video display unit, may be made smaller at the left end of half mirror 503 with respect to display surface 501A in the horizontal direction than at the center of half mirror 503. In a case of mounting electronic mirror device 5000 in an automobile with a steering wheel on the left side, the gap between half mirror 503 and liquid crystal display 501 may be made smaller at the right end of half mirror 503 in the horizontal direction than at the center of half mirror 503. In these manners, the gap between half mirror 503 and liquid crystal display 501 may be made smaller at an end away from the eyes of the driver in the condition that the electronic mirror device is mounted in an automobile. The configuration in which the gap is made smaller at both of the right and left ends is applicable to both the automobile with a left-hand steering wheel and the automobile with a right-hand steering wheel.

### INDUSTRIAL APPLICABILITY

The electronic mirror device of the present invention is useful as a monitoring device for vehicles.

### REFERENCE MARKS IN THE DRAWINGS

- 1: automobile
- 2: interior
- 3: driver's seat
- 4: front passenger seat
- 6: mounting unit
- 5A: body case
- 500: display unit
- 501: liquid crystal display
- 501A: display surface
- 503: half mirror
- 521: controller
- 522: storage
- 523: operation unit
- 5000: electronic mirror device

## Claims

1. An electronic mirror device comprising a display device that is mounted on a mounting position of a rear view mirror in an interior of a vehicle and displays an image taken by a camera mounted to the vehicle,
wherein the display device has:
a body case having an opening; and
a display unit mounted in the body case and having:
a video display unit including a display surface facing toward the opening of the body case; and
a half mirror disposed closer to the opening of the body case than to the video display unit and apart from the display surface of the video display unit, and
wherein a gap between the half mirror and the video display unit is smaller at one end or both ends of the half mirror in a horizontal direction than at a center of the half mirror.

2. The electronic mirror device according to claim 1,
wherein the half mirror has a flat plate shape, and
the video display unit is curved to form a recess facing the half mirror.

3. The electronic mirror device according to claim 1,
wherein the display surface of the video display unit is planar, and
the half mirror is curved to form a protrusion protruded toward a direction opposite to the display surface.

4. The electronic mirror device according to any of claims 1 to 3,
wherein the gap between the video display unit and the half mirror at the one end or the both ends of the half mirror is set so that a parallax shift viewed from a driver's seat between an image displayed on the video display unit and an image caused because the image displayed on the video display unit is reflected by a surface of the half mirror facing the display surface becomes equal to or smaller than one pixel of the video display unit.
